# EUROPEAN PATENT SPECIFICATION

(11) **EP 2 749 407 B1**
(45) Date of publication and mention of the grant of the patent: **05.02.2020**
(21) Application number: 13199184.6
(22) Date of filing: 20.12.2013
(51) Int. Cl.: B32B 5/00, B32B 5/24, B32B 7/00, B32B 7/02, B32B 7/04, B32B 7/12, B32B 27/00, B32B 27/02, B32B 27/12, B32B 27/30, B32B 27/32

(54) **LAMINATES WITH FLUOROPOLYMER CLOTH**
LAMINATE MIT FLUORPOLYMERTUCH
STRATIFIÉS MUNIS DE TISSU DE FLUOROPOLYMÈRES

(30) Priority: 28.12.2012 US 201261747154 P; 19.04.2013 US 201361814175 P
(43) Date of publication of application: 02.07.2014
(73) Proprietor: Saint-Gobain Performance Plastics Corporation, Solon, OH 44139 (US)
(72) Inventor: Schwiegel, Martin, 50823 Cologne (DE); Waldöfner, Andreas, 47167 Duisburg (DE)
(74) Representative: Zimmermann & Partner Patentanwälte mbB

(56) References cited:
- WO-A1-2013/181431
- JP-A- 2007 118 541
- US-A- 4 943 473
- US-A1- 2009 197 091
- US-A1- 2010 266 852
- US-A1- 2011 247 686
- US-A1- 2012 063 952
- US-B1- 6 517 919
- US-B2- 6 770 577

## Description

### FIELD OF THE DISCLOSURE

The disclosure relates to laminates comprising a fluoropolymer fabric and a fluoropolymer film.

### BACKGROUND

Diaphragm pumps are widely used for pumping a variety of materials especially when the materials are abrasive, have high viscosity, or consist of slurries that might damage pump parts or pump designs. These pumps can be air driven as opposed to oil driven. This is of benefit when it comes to pumping flammable liquids or using the pumps in environments where electrically driven equipment could otherwise be hazardous. However, electrically or otherwise mechanically driven designs also find wide utility. Due to the wide nature of different materials these pumps are used to move, a correspondingly wide variety of materials are used in their construction. These include plastics and metals. For the same reason the critical driving member, i.e., the pump diaphragm must be manufactured in a variety of materials.

Chemically resistant layers, such as those made of polytetrafluoroethylene (PTFE), are widely used in industry to protect sensitive parts of machinery or equipment from the corrosive effects of acids or other chemicals. One such use is in one or two piece pump diaphragms commonly used with air or electrically driven diaphragm pumps. In the two piece diaphragms, an outer PTFE overlay diaphragm is commonly used to protect an inner rubber diaphragm from materials that would cause rapid failure of the rubber part alone. In some other cases, the PTFE provides the sole material of construction of the diaphragm.

Industrial belts contain fill yarns. These belts are often subject to high stresses due to excess tension applied (required to prevent slippage of the conveyor belt on the machine drive rolls), stretching, heavy loads conveyed by the belt, and high speed movement combined with side to side movement induced by guiding systems or off-tracking problems. Applied tension, thermal extremes and thermal shock, often cause belt distortion (e.g. longitudinal ridges).

Expansion joints are used to span the distance between rigid ductwork, connecting for example, a metal flue duct with a metal or solid emissions stack in a power plant (the various pipes, ducts, and other conduits herein referred to as "Conduits" unless stated otherwise in a claim). The expansion joint compensates for and accommodates dimensional changes associated with the expansion and contraction of the ductwork, as it is exposed due to thermal cycling or pressure changes within the duct. It acts as a protection bellow as the solid ductwork expands and contracts when it transitions through heating and cooling cycles. The expansion joint must accommodate stresses, intermittent flexing and environmental conditions (high winds, temperature excursions, sunlight, caustic flue gasses) associated with the application.

One disadvantage in the industry is the manufacturing of laminates that can withstand the stress, tension, and wear in applications as described above and also have a resistant layer that protects sensitive parts.

Therefore, it would be advantageous if a laminate could be produced that would combine the physical demands of the above described diaphragm, belts, expansion joints with the chemically resistant properties of exposed layers.

### SUMMARY

The present invention discloses a laminate and a method of manufacturing said laminate as defined in claims 1 and 8.In a first aspect, a laminate includes a first layer of a first fluoropolymer. The laminate can further include a second layer of at least one ply of a fluoropolymer fabric overlying the first layer. The laminate can further include a third layer of a second fluoropolymer overlying the second layer opposite to the first layer. The laminate can have a strain of not more than 50% at a stress of 15MPa as measured by DIN EN ISO 527 with a sample width of about 1 inch, at a clamp distance of about 50 mm, and a speed of about 50 mm/min.

In another aspect, a composite diaphragm comprises a first layer of skived polytetrafluoroethylene (PTFE) or skived modified polytetrafluoroethylene (mPTFE). The composite diaphragm can further include a second layer of at least one ply of a fluoropolymer fabric overlying the first layer. The fluoropolymer fabric can include polytetrafluoroethylene (PTFE) or modified polytetrafluoroethylene (mPTFE). The composite diaphragm can further include a third layer of skived polytetrafluoroethylene (PTFE) or skived modified polytetrafluoroethylene (mPTFE) overlying the second layer opposite to the first layer. The diaphragm composite can have a life time of at least about 2.5 megacycles in a high frequency flexlife test.

In yet one further aspect, a diaphragm membrane includes a laminate. The laminate can comprise a first layer of a first fluoropolymer. The laminate can further include a second layer of at least one ply of a fluoropolymer fabric overlying the first layer. The laminate can further include a third layer of a second fluoropolymer overlying the second layer opposite to the first layer. The laminate can have a strain of not more than 50% at a stress of 15MPa as measured by DIN EN ISO 527 with a sample width of about 1 inch, at a clamp distance of about 50 mm, and a speed of about 50 mm/min. The diaphragm membrane can further include a backing. The backing can have a connector for a piston or a spring. In one embodiment, a diaphragm pump includes the diaphragm membrane. In another embodiment, a solenoid valve includes the diaphragm membrane.

In another aspect, a conveyor belt includes a laminate. The laminate can include a first end and a second end. The laminate can further include a first layer of a first fluoropolymer. The laminate can further include a second layer of at least one ply of a fluoropolymer fabric overlying the first layer. The laminate can further include a third layer of a second fluoropolymer overlying the second layer opposite to the first layer. The laminate of the conveyor belt can have a strain of not more than 50% at a stress of 15MPa as measured by DIN EN ISO 527 with a sample width of about 1 inch, at a clamp distance of about 50 mm, and a speed of about 50 mm/min. The conveyor belt can include a seam connecting the first with the second end.

In yet one further aspect, a bearing includes a laminate. The laminate can include a first layer of a first fluoropolymer. The laminate can further include a second layer of at least one ply of a fluoropolymer fabric overlying the first layer. The laminate can further include a third layer of a second fluoropolymer overlying the second layer opposite to the first layer, wherein the laminate has a strain of not more than 50% at a stress of 15MPa as measured by DIN EN ISO 527 with a sample width of about 1 inch, at a clamp distance of about 50 mm, and a speed of about 50 mm/min. The bearing can further include a substrate, the substrate overlying and in direct contact with the third layer.

In another aspect, a method of manufacturing a laminate includes providing a first layer of a first fluoropolymer. The method can further include overlying a second layer of at least one ply of a fluoropolymer fabric onto the first layer. The method may further include overlying a third layer of a second fluoropolymer onto the second layer opposite to the first layer to form a stack. The method can further include compressing the stack at a pressure of at least 1.5 MPa. The method can further include heating the stack to a temperature of at least the glass transition temperature T_{g} of the fluoropolymer fabric for a first duration of at least 100 seconds.

In one further aspect, a method of manufacturing a laminate comprises providing a first layer of a first fluoropolymer. The method can further include applying a first adhesive onto the first layer. The method can further include overlying a second layer of at least one ply of a fluoropolymer fabric onto the first adhesive. The method may further include applying a second adhesive. The method can further include overlying a third layer of a second fluoropolymer onto the second adhesive to form a stack. The method can further include compressing the stack at a pressure of at least about 1.5 MPa. The method can further include heating the stack to a first temperature of at least the melting temperature Tₘ of the first adhesive or the second adhesive for a first duration of at least 100 seconds.

### BRIEF DESCRIPTION OF THE DRAWINGS

The present disclosure may be better understood, and its numerous features and advantages made apparent to those skilled in the art by referencing the accompanying drawings.
FIGs. 1, 2, and 3 show exemplary embodiments of a laminate in schematic sectional view.
FIG. 4A shows a laminate disc as a sample for the high frequency flex life test.
FIGs. 4B-4D display schematic views of spherical calotte and a test assembly for conducting the high frequency life test.
FIG. 5 displays an exemplary embodiment of a laminate as an expansion joint.
FIG. 6 displays test results of tensile strength of a sample laminate and comparative samples.

The use of the same reference symbols in different drawings indicates similar or identical items.

### DETAILED DESCRIPTION

In an embodiment, a laminate includes a first layer of a first fluoropolymer. The laminate can further include a second layer of at least one ply of a fluoropolymer fabric overlying the first layer. The laminate can further include a third layer of a second fluoropolymer overlying the second layer opposite to the first layer. The laminate can have a strain of not more than 50% at a stress of 15MPa as measured by DIN EN ISO 527 with a sample width of about 1 inch, at a clamp distance of about 50 mm, and a speed of about 50 mm/min.

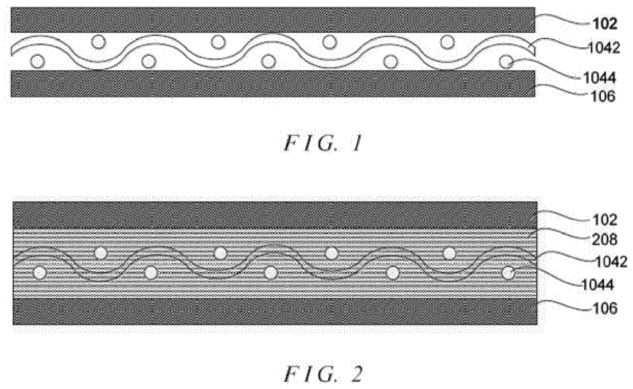

Referring to FIG. 1, the laminate includes a fluoropolymer layer **102.** The fluoropolymer layer **102** can be selected from any fluoropolymer. In one embodiment, layer **102** can include a polytretrafluoroethylene (PTFE) or modified polytetrafluoroethylene (mPTFE). In one embodiment, layer **102** consists essentially of PTFE or mPTFE. In further embodiments, the PTFE or mPTFE can be skived tape or a cast film. In another embodiment, layer **102** can include an extruded fluoropolymer. The extruded fluoropolymer can include tetrafluoroethylene-hexafluoropropylene (FEP), perfluoroalkoxyethylene (PFA), ethylene-tetrafluoroethylene (ETFE), tetrafluoro-ethylene-perfluoro(methyl vinyl ether) (MFA), polyvinylidene fluoride (PVDF), ethylene-chlorotrifluoroethylene (ECTFE), or any mixture thereof.

Layer **102** can have a thickness of at least about 0.05 mm, such as of at least about 0.1 mm, at least about 0.15 mm, at least about 0.2 mm, at least about 0.25 mm, at least about 0.3 mm, at least about 0.35 mm, at least about 0.4 mm, or at least about 0.45 mm. In another embodiment, the thickness of layer **102** is not greater than about 2 mm, such as not greater than about 1.8 mm, not greater than about 1.6 mm, not greater than about 1.4 mm, not greater than about 1.2 mm, not greater than about 1 mm, not greater than about 0.95 mm, not greater than about 0.9 mm, not greater than about 0.85 mm, not greater than about 0.8 mm, not greater than about 0.75 mm, not greater than about 0.7 mm, not greater than about 0.65 mm, not greater than about 0.6 mm, not greater than about 0.55 mm, not greater than about 0.5 mm, not greater than about 0.4 mm, or not greater than about 0.3 mm. In one particular embodiment, the thickness of layer **102** ranges from about 0.4 mm to about 0.55 mm.

The laminate further includes a second layer including at least one ply of fluoropolymer fabric. The fluoropolymer fabric can include PTFE. In one embodiment, the ply can include expanded PTFE. In another embodiment, the fluoropolymer fabric of the ply can include modified polytetrafluoroethylene (mPTFE), ethylene-tetrafluoroethylene (ETFE), perfluoroalkoxyethylene (PFA), tetrafluoroethylene-hexafluoropropylene (FEP), tetrafluoro-ethylene-perfluoro (methyl vinyl ether) (MFA), polyvinylidene fluoride (PVDF), ethylene-chlorotrifluoroethylene (ECTFE), or any combination thereof. In one embodiment, the fluoropolymer fabric consists essentially of polytetrafluoroethylene (PTFE). In another embodiment, the fluoropolymer fabric consists essentially of modified polytetrafluoroethylene (mPTFE).

In an embodiment, the ply of fluoropolymer fabric can have a thickness of at least about 0.04 mm, such as of at least about 0.08 mm, at least about 0.12 mm, at least about 0.16 mm, at least about 0.20 mm, at least about 0.24 mm, at least about 0.28 mm, at least about 0.32 mm, or at least about 0.36 mm. In another embodiment, the ply of fluoropolymer fabric can have a thickness of not greater than about 1 mm, such as not greater than about 0.8 mm, not greater than about 0.6 mm, not greater than about 0.55 mm, not greater than about 0.5 mm, not greater than about 0.45 mm, not greater than about 0.4 mm, not greater than about 0.38 mm, not greater than about 0.34 mm, not greater than about 0.3 mm, not greater than about 0.26 mm, or not greater than about 0.22 mm. In a particular embodiment, the thickness can be in a range from about 0.22 mm to about 0.28 mm.

The ply includes warp yarns **1042** and weft yarns **1044.** In embodiments, the warp and the weft can be in an orthogonal orientation, i.e., the angle between all the warp direction and the weft direction is about 90°. In another embodiment, the angle between the warp direction and the weft direction can be non-orthogonal, i.e. the angle is between 0° and 90°. For example, in one embodiment, a skewed angle between the warp direction and weft direction can be about 45°. It is also contemplated the laminate includes at least two plies of fluoropolymer fabric overlying each other. Accordingly, it is also contemplated that in cases of at least two plies, the assembly can include of orthogonal warp/weft fabrics and non-orthogonal warp/weft fabrics.

In embodiments the warp yarn **1042** or weft yarn **1044** can have the same thickness or different thickness. In embodiments, either thickness can be at least about 0.02 mm, such as at least about 0.04 mm, at least about 0.06 mm, at least about 0.08 mm, at least about 0.1 mm, at least about 0.12 mm, at least about 0.14 mm, or at least about 0.16 mm. In another embodiment, the yarn thickness can be not greater than about 0.3 mm, such as not greater than about 0.28 mm, not greater than about 0.26 mm, not greater than about 0.24 mm, not greater than about 0.22 mm, not greater than about 0.2 mm, or not greater than about 0.18 mm. In one particular embodiment, the yarn thickness can range from about 0.16 mm to about 0.18 mm.

Each ply according to embodiments can have a weight of at least about 100 g/m², such as at least about 120 g/m², at least about 140 g/m², at least about 160 g/m², at least about 180 g/m², at least about 200 g/m², at least about 220 g/m², at least about 240 g/m², at least about 260 g/m², at least about 280 g/m², or at least about 300 g/m². In another embodiment, the ply can have a weight of not greater than about 500 g/m², not greater than about 480 g/m², not greater than about 460 g/m², not greater than about 440 g/m², not greater than about 420 g/m², not greater than about 400 g/m², not greater than about 380 g/m², not greater than about 360 g/m², not greater than about 340 g/m², or not greater than about 320 g/m². In one particular embodiment, the weight can range from about 280 g/m² to about 340 g/m².

Addressing the thread counts of the fluoropolymer fabric, the ply has a warp thread count and a weft thread count. The warp thread count and the weft thread count can be the same or different. Either thread count can be at least about 100 threads/10 cm, such as at least about 125 threads/10 cm, at least about 150 threads/10 cm, at least about 175 threads/10 cm, at least about 200 threads/10 cm, at least about 225 threads/10 cm, at least about 250 threads/10 cm, at least about 275 threads/10 cm, at least about 300 threads/10 cm, at least about 325 threads/10 cm, or at least about 350 threads/10 cm. In another embodiment, either thread count, warp or weft thread count, can be not greater than about 600 threads/10 cm, such as not greater than about 575 threads/10 cm, not greater than about 550 threads/10 cm, not greater than about 525 threads/10 cm, not greater than about 500 threads/10 cm, not greater than about 475 threads/10 cm, not greater than about 450 threads/10 cm, not greater than about 425 threads/10 cm, not greater than about 400 threads/10 cm, or not greater than about 375 threads/10 cm. In one particular embodiment, the thread count for both yarns are the same and range from about 325 threads/10 cm to 425 threads/10 cm.

Still referring to FIG. 1, the laminate can include a third layer **106** overlying the ply and opposite to layer **102.** In one embodiment, layer **106** can be of the same material and thickness as layer **102.** In another embodiment, layer **106** can differ from layer **102** either in type of fluoropolymer, in mode of applying the layer, or in thickness. For example, layer **102** can be a skived PTFE layer and layer **106** can be a cast mPTFE layer, or vice versa. In another example, layer **102** can have skived PTFE layer and layer **106** can have an extruded layer, wherein the extruded layer can include tetrafluoroethylene-hexafluoropropylene (FEP), perfluoroalkoxyethylene (PFA), ethylene-tetrafluoroethylene (ETFE), tetrafluoro-ethylene-perfluoro(methyl vinyl ether) (MFA), polyvinylidene fluoride (PVDF), ethylene-chlorotrifluoroethylene (ECTFE), or any mixture thereof.

Still referring to FIG. 1, in embodiments, layer **102** or layer **106** can further include at least one filler. In other embodiments, the layer can include the same or different filler. The filler can be selected from fibers, glass fibers, carbon fibers, aramids, inorganic materials, ceramic materials, carbon, glass, graphite, aluminum oxide, molybdenum sulfide, bronze, silicon carbide, woven fabric, powder, sphere, thermoplastic material, polyimide (PI), polyamidimide (PAI), polyphenylene sulfide (PPS), polyethersulfone (PES), polyphenylene sulfone (PPSO2), liquid crystal polymers (LCP), polyetherketone (PEK), polyether ether ketones (PEEK), aromatic polyesters (Ekonol), mineral materials, wollastonite, barium sulfate, or any combinations thereof.

In embodiments, the filler can be present in an amount of at least about 1% by volume, such as at least about 2% by volume, at least about 3% by volume, at least about 5% by volume, at least about 7% by volume, at least about 10% by volume, at least about 12% by volume, at least about 15% by volume, at least about 17% by volume, or at least about 20% by volume. In another embodiment, the filler can be present in an amount of at not greater than about 40% by volume, such as not greater than about 35% by volume, not greater than about 30% by volume, not greater than about 27% by volume, not greater than about 25% by volume, not greater than about 22% by volume, not greater than about 20% by volume, not greater than about 17% by volume, or not greater than about 15% by volume.

FIG. 2 depicts one further embodiment of a laminate. This laminate includes top and bottom layers **102** and **106** and a ply made of yarns **1042** and **1044.** In contrast to FIG. 1, the ply is embedded in an elastomer matrix **208.** Accordingly, layers **102** and **106** adhere to the elastomer of matrix **208.** In embodiments, the elastomer of layer **208** can be thermosetting elastomers. In a particular embodiment, the elastomer comprising matrix **208** can be a fluoroelastomers. For example, the fluoroelastomers can include copolymers of hexafluoropropylene (HFP), vinylidene fluoride (VDF), tetrafluoroethylene (TFE), and perfluoromethylvinylether (PMVE).

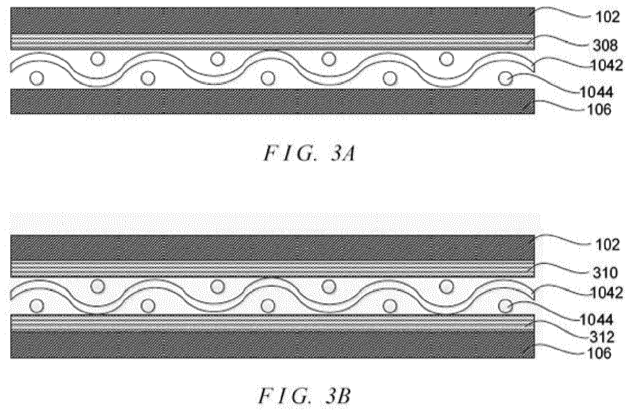

Referring to FIGs. 3A and 3B, in another embodiment, there can be an adhesive layer **308** between layer **102** and the ply made of yarns **1042** and **1044.** In another embodiment as displayed in FIG. 3B, there can be one adhesive layer **310** between layer **102** and the ply made of yarns **1042** and **1044,** and also an adhesive layer **312** between the ply and layer **106.** The adhesive layers **308, 310,** and **312** can include tetrafluoroethylene-hexafluoropropylene (FEP), modified tetrafluoroethylene-hexafluoropropylene (mFEP), perfluoroalkoxyethylene (PFA), modified perfluoroalkoxyethylene (mPFA), polyimide (PI), polyamidimide (PAI), polyphenylene sulfide (PPS), polyphenylene sulfone (PPSO2), liquid crystal polymers (LCP), polyether ether ketones (PEEK), aromatic polyesters (Ekonol), ethylene-tetrafluoroethylene (ETFE), tetrafluoro-ethylene-perfluoro (methyl vinyl ether) (MFA), modified polytetrafluoroethylene (mPTFE), polyvinylidene fluoride (PVDF), ethylene-chlorotrifluoroethylene (ECTFE), polyethersulfone (PES), polyetherketone (PEK), and any combination thereof. In embodiments, layer **310** and **312** can be the same material or different material. Still referring to FIG. 3B, in one particular embodiment, layers **102** and **106** can include the same fluoropolymer selected from mPTFE or PTFE, yarns **1042** and **1044** includes PTFE, and layers **310** and **312** both include PFA.

Referring to FIGs. 1-3, laminates as displayed can have a total thickness of at least about 0.3 mm, such as at least about 0.4 mm, at least about 0.5 mm, at least about 0.6 mm, at least about 0.7 mm, at least about 0.8 mm, at least about 0.85 mm, at least about 0.9 mm, or at least about 0.95 mm. In another embodiment, the total thickness is not greater than about 2.0 mm, such as not greater than about 1.8 mm, not greater than about 1.6 mm, not greater than about 1.5 mm, not greater than about 1.4 mm, not greater than about 1.3 mm, not greater than about 1.2 mm, not greater than about 1.15 mm, or not greater than about 1.1 mm. In one particular embodiment, the total thickness can range from about 0.85 mm to about 1.15 mm.

Referring to FIGs. 1-3, laminates as displayed can be prepared by a time, temperature, and pressured controlled lamination process, wherein layer **102,** the ply comprising the fluoropolymer fabric, and layer **106** are assembled, optionally including precursor material to form matrix **208,** or adhesive layers **308, 310,** and **312.** For example, such precursor can be powdered forms of the matrix or adhesion material.

According to one embodiment, the process for manufacturing the laminate includes applying a first adhesive, which will result in layer **310,** onto the first layer of a first fluoropolymer, which will result in layer **102.** Then, at least one ply of a fluoropolymer fabric comprising yarns **1042** and **1044** is applied onto the first adhesive. Then a second layer of adhesive, which will result in layer **312** is applied onto the ply. Afterwards, a layer of a second fluoropolymer, which will become layer **106** upon completion of the process, is applied. Accordingly, the assembly of first fluoroploymer, adhesives, ply, and second fluoropolymer form a pre-lamination stack.

In the time-pressure-temperature controlled lamination process. The pre-lamination stack is compressed to at least about 0.5 MPa, such as at least about 0.7 MPa, at least about 1.0 MPa, at least about 1.2 MPa, at least about 1.5 MPa, at least about 1.6 MPa, at least about 1.7 MPa, at least about 1.8 MPa, at least about 1.9 MPa, at least about 2.0 MPa, at least about 2.05 MPa, at least about 2.10 MPa, or at least about 2.15 MPa. In another process example, the pressure is not greater than about 4.0 MPa, such as not greater than about 3.5 MPa, not greater than about 3.0 MPa, not greater than about 2.5 MPa, not greater than about 2.4 MPa, not greater than about 2.35 MPa, not greater than about 2.30 MPa, not greater than about 2.25 MPa, or not greater than about 2.20 MPa.

At the same time, the compressed pre-lamination stack is heated to at least the glass transition temperature T_{g} of the fluoropolymer fabric. In another process example, the compressed pre-lamination stack is heated to at least the melting temperature Tₘ of the first adhesive or the second adhesive. For example the compressed pre-lamination stack can be heated to at least about 320 °C, such as at least about 330 °C, at least about 340 °C, at least about 350 °C, at least about 360 °C, at least about 370 °C, at least about 375 °C, at least about 380 °C, at least about 385 °C, at least about 390 °C, at least about 395 °C, at least about 400 °C, or at least about 405 °C. In another process example, the compressed pre-lamination stack can be heated to not more than about 420 °C, such as not more than about 415 °C, not more than about 410 °C, not more than about 405 °C, not more than about 400 °C, not more than about 395 °C, not more than about 390 °C, or not more than about 385 °C.

It was found that for a pre-lamination stack comprising mPTFE or PTFE skived fluoropolymers (thickness 0.42 mm and 0.5 mm, respectively), PFA as an adhesive (thickness 0.025 mm) and a PTFE fabric (Gore-Rastex® CCC 216, thickness 0.25 mm), the stress-strain curve of the resulting laminate and the peel strength of the resulting laminate show a correlation to the temperature applied in the heating process in the range from 375 °C to 415 °C. In general, the tensile strength of the laminate decreases with increasing process temperature, while the peel strength increases with increasing temperature. Accordingly, the process allows for optimization for laminates of a desired tensile strength or desired peel strength.

Referring further to the lamination process, the pre-lamination stack can be compressed and heated as described above for a duration of at least 100 seconds, such as at least about 110 seconds, such as at least about 120 seconds, at least about 130 seconds, at least about 140 seconds, or at least 145 seconds. The first duration can be not greater than about 250 seconds, such as not greater than about 220 seconds, not greater than about 200 seconds, not greater than about 180 seconds, not greater than about 170 seconds, not greater than about 160 seconds, or not greater than about 150 seconds.

In another process example, after the heating, the stack can be cooled to a second temperature. For example the stack can be cooled to not greater than about 100 °C, such as not greater than about 90 °C, not greater than about 80 °C, not greater than about 70 °C, not greater than about 60 °C, not greater than about 50 °C, not greater than about 40 °C, not greater than about 35 °C, or not greater than about 30 °C. The cooling can occur at a cooling rate of at least 0.0001 °C/s and not greater than 2 °C/s. In one process example, the cooling rate can be not greater than 1.8 °C/s, such as not greater than 1.6 °C/s, not greater than 1.4 °C/s, not greater than 1.2 °C/s, not greater than 1.0 °C/s, not greater than 0.8 °C/s, not greater than 0.6 °C/s, not greater than 0.5 °C/s, not greater than 0.4 °C/s, not greater than 0.3 °C/s, not greater than 0.2 °C/s, or not greater than 0.1 °C/s.

As described above, the process for manufacturing the laminates allow for adjusting the tensile strength of the laminate. For example, high tensile strength is desired for applications such as conveyor belts where forces are predominantly applied along the longitudinal axis. Contrary thereto, softer materials with lower tensile strength is desired for expansion joints, where forces from pressure or temperature changes act predominantly perpendicular to the major surface of the laminate. Accordingly, the laminates for expansion joints can be designed to be softer but with a higher peel strength. For membranes of diaphragm pumps on the other hand, there are forces which hold the membrane in its frame, i.e. forces that act within the plane of the laminate, and there are forces during the pumping process that act perpendicular to the membrane surface. Accordingly, for diaphragms, a laminate having appropriate tensile strength and appropriate peel strength can be designed by choice of the material, their dimensions, and the time-pressure-temperature controlled lamination process. Similarly, bearings can be manufactured as to specification.

In one embodiment, the laminates show not more than 50% at a stress of 15MPa as measured by DIN EN ISO 527. According to DIN EN ISO 572, a sample width of about 1 inch, at a clamp distance of about 50 mm, is pulled at a speed of about 50 mm/min during the measurement of the stress strain curve. In other embodiments, the strain is not more than 50% at a stress of 20 MPa, not more than 50% at a stress of 25 MPa, not more than 50% at a stress of 30 MPa, not more than 50% at a stress of 32 MPa, not more than 50% at a stress of 34 MPa, or not more than 50% at a stress of 36 MPa.

In yet other embodiments, laminates when exposed to a stress of 15 MPa can have a strain of not more than 45%, such as not more than 40%, not more than 35%, not more than 30%, not more than 25%, not more than 24%, not more than 23%, not more than 22%, not more than 21%, or not more than 20%. In yet even other embodiments, laminates when exposed to a stress of 25MPa can have a strain is not more than 45%, such as not more than 40%, not more than 39%, not more than 38%, not more than 37%, not more than 36%, or not more than 35%.

In one embodiment, the laminates have a Deformation under Load as measured after 24 hours at a load of 25 MPa and a 15 minutes after removal of the load in accordance with ASTM D621 of not greater than 150 microns, such as not greater than 140 microns, not greater than 130 microns, not greater than 120 microns, not greater than 110 microns, not greater than 100 microns, not greater than 98 microns, not greater than 96 microns, not greater than 94 microns, not greater than 92 microns, not greater than 90 microns, not greater than 85 microns, not greater than 80 microns, or not greater than 70 microns. In one embodiment, the Deformation under Load is at least 1 microns. In yet one further embodiment, the Deformation under Load ranges from 1 micron to 150 microns, from 5 microns to 120 microns, from 20 microns to 100 microns, or from 50 microns to 95 microns.

In one other embodiment the laminates have a water vapor permeability under conditions described in the Examples of not greater than 0.088 g∗mm/m²∗d, such as not greater than 0.087 g∗mm/m²∗d, not greater than 0.086 g∗mm/m²∗d, not greater than 0.085 g∗mm/m²∗d, not greater than 0.084 g∗mm/m²∗d, not greater than 0.082 g∗mm/m²∗d, not greater than 0.080 g∗mm/m²∗d, not greater than 0.078 g∗mm/m²∗d, not greater than 0.075 g∗mm/m²∗d, not greater than 0.070 g∗mm/m²∗d, or not greater than 0.065 g*mm/m²*d. In one embodiment, the water vapor permeability is at least 0.0001 g∗mm/m²∗d. In yet another embodiment, the water vapor permeability ranges from 0.001 g∗mm/m²∗d to 0.088 g∗mm/m²∗d, from 0.01 g∗mm/m²∗d to 0.086 g∗mm/m²∗d, from 0.03 g∗mm/m²∗d to 0.084 g∗mm/m²∗d, or from 0.04 g∗mm/m²∗d to 0.080 g∗mm/m²∗d.

In one further embodiment the laminates have a oxygen permeability under conditions described in the Examples of not greater than 7800 cc(O₂)∗mm/m²∗d∗atm, such as not greater than 7700 cc(O₂)∗mm/m²∗d∗atm, not greater than 7600 cc(O₂)∗mm/m²∗d∗atm, not greater than 7500 cc(O₂)∗mm/m²∗d∗atm, not greater than 7400 cc(O₂)∗mm/m²∗d∗atm, not greater than 7200 cc(O₂)∗mm/m²∗d∗atm, not greater than 7000 cc(O₂)∗mm/m²∗d∗atm, not greater than 6800 cc(O₂)∗mm/m²∗d∗atm, not greater than 6600 cc(O₂)∗mm/m²∗d∗atm, or not greater than 6400 cc(O₂)∗mm/m²∗d∗atm. In one embodiment, the oxygen permeability is at least 100 cc(O₂)∗mm/m²∗d∗atm. In another embodiment, the oxygen permeability ranges from 1000 cc(O₂)∗mm/m²∗d∗atm to 7800 cc(O₂)∗mm/m²∗d∗atm, such as from 1000 cc(O₂)∗mm/m²∗d∗atm to 7800 cc(O₂)∗mm/m²∗d∗atm, from 2000 cc(O₂)∗mm/m²∗d∗atm to 7500 cc(O₂)∗mm/m²∗d∗atm, or from 4000 cc(O₂)∗mm/m²∗d∗atm to 7000 cc(O₂)∗mm/m²∗d∗atm.

Since membranes of diaphragm pumps come at least on one side in contact with the material that is pumped, these parts are exposed to high wear and tear. Accordingly, laminates with long life time are desired. A high frequency flexlife test allows in a lab setting a determination for lifetime and onset of wear or fatigue of laminates.

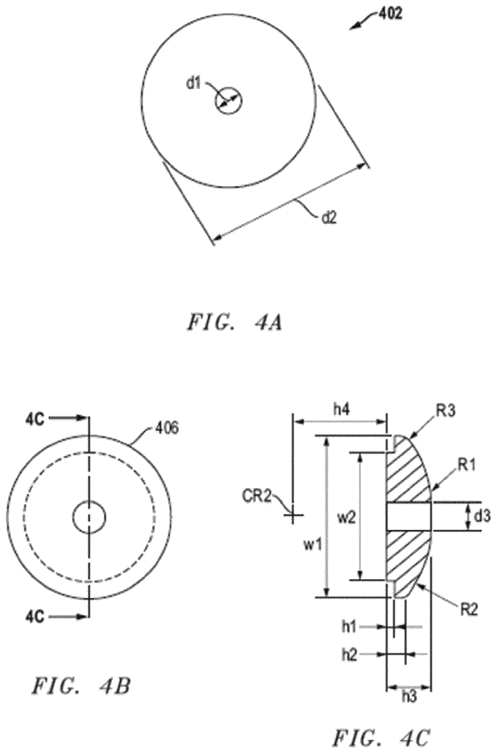

Referring to FIG. 4A, the high frequency flexlife test uses a disc shape test sample **402** having a center hole with a hole diameter d1 and a disc diameter d2. While the high frequency flexlife test allows for a variety of size, samples of the high frequency flexlife test herein have a d1 of 18 mm and a d2 of 125 mm.

FIG. 4B depicts a top view of the spherical calotte **404** of the high frequency flexlife apparatus. The spherical calotte is made of metal wherein the metal surface that contacts the sample has a surface roughness Rₐ. In one embodiment, the spherical calotte is made of AlMg₃ alloy (industrial standard: 3.3535/EN AW-5754) with a surface roughness of 1.6 microns. FIG. 4C is a cross-sectional view of the spherical calotte with a detailed mark-up of the dimensions and radii of curvatures (arcs). While any variety of dimensions can be used, spherical calottes of the presently described high frequency flexlife test are: d3=15 mm, h1=4.5 mm, h2=10.9 mm, h3=23.9. mm, h4=50 mm, w1=87.5 mm, w2=70 mm, R1=5 mm arc, R2=75 mm arc, R3=5 mm arc, and CR2 is the center point.

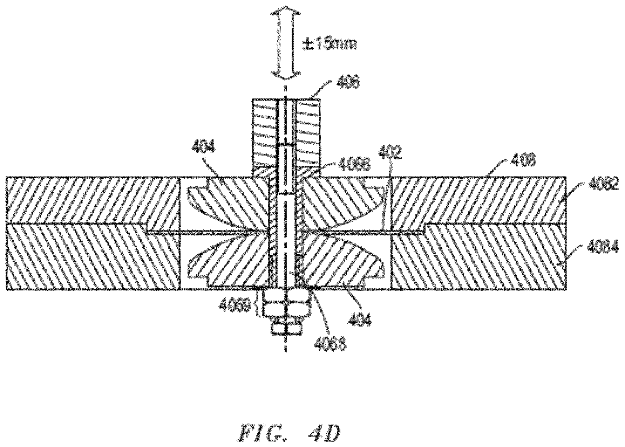

Furthermore, FIG. 4D depicts the test set up for the high frequency flexlife test. The sample **402** is clamped into ring shaped sample fixation **408** having an upper clamping ring **4082** and a lower clamping ring **4084.** The sample fixation **408** has an inner diameter of about 95 mm. Two spherical calottes as described above are placed above and below the sample **402.** A set screw **4068** fixated with fixation nuts **4069** connects the two spherical calottes through a guide sleeve **4066** with adapter **406.**

For the test, adapter **406** is moved perpendicular to the sample **402.** The range of one cycle is from the neutral position as depicted in FIG. 4D about 15 mm into one direction, back to the neutral position, 15 mm into the opposite direction and back to the neutral position. The high frequency flex test is conducted at a frequency of about 10 Hertz, i.e. 10 cycles per second. A counter records the number of cycles until the sample breaks or a cycle can no longer be completed.

In one embodiment, the laminates as described herein have life times of at least about 2,500,000 cycles or 2.5 megacycles of the high frequency flexlife test. In another embodiment, the laminates have life times of at least about 3.5 megacycles, at least about 4.0 megacycles, at least about 4.5 megacycles, at least about 5.0 megacycles, at least about 5.5 megacycles, at least about 6.0 megacycles, at least about 6.5 megacycles, at least about 7.0 megacycles, at least about 7.2 megacycles, at least about 7.4 megacycles, at least about 7.6 megacycles, at least about 7.8 megacycles, at least about 8.0 megacycles, or at least about 8.2 megacycles. In order to adjust the life time of the membrane with life times of other parts, the number of a desired lime time can be limited. For example, the life time can not be greater than about 15 megacycles.

It is within the scope of the present disclosure to include further modification and/or apparatuses that include the herein described laminates. For example, a diaphragm membrane can include a laminate having a first layer of a first fluoropolymer, a second layer of at least one ply of a fluoropolymer fabric overlying the first layer, and a third layer of a second fluoropolymer overlying the second layer opposite to the first layer. The laminate can have a strain of not more than 50% at a stress of 15MPa as measured by DIN EN ISO 527. The diaphragm membrane can further include a backing, the backing having a connector for a piston or a spring. Moreover, a diaphragm pump can include the diaphragm membrane as described herein. In another embodiment, a solenoid valve can include the diaphragm membrane as described herein.

In another embodiment, a conveyor belt can include a laminate, the laminate comprising a first end and a second end. The laminate can have a first layer of a first fluoropolymer, a second layer of at least one ply of a fluoropolymer fabric overlying the first layer, and a third layer of a second fluoropolymer overlying the second layer opposite to the first layer, wherein the laminate has a strain of not more than 50% at a stress of 15MPa as measured by DIN EN ISO 527 with a sample width of about 1 inch, at a clamp distance of about 50 mm, and a speed of about 50 mm/min. Moreover, the conveyor belt includes a seam connecting the first with the second end.

In yet another embodiment, a bearing including the three layered laminates as described herein can have a substrate, the substrate overlying and in direct contact with the third layer.

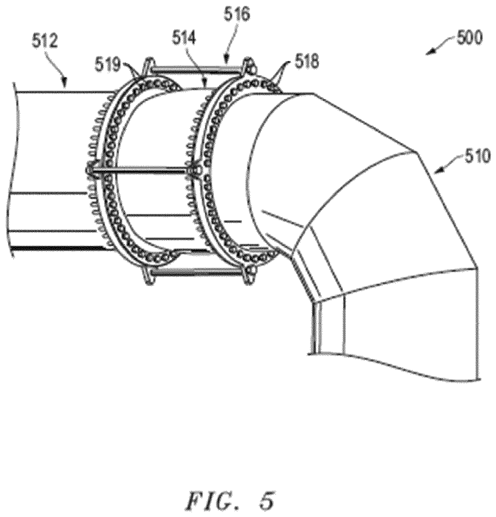

FIG. 5 depicts an expansion joint assembly **500,** with flue gas pipe sections **510** and **512.** In between the flue gas pipe sections is the expansion joint including the bellow cylinder **514** made of a laminate as described herein. The expansion joint is supported by support bars **516** and connected to the adjacent flue gas pipe sections by screws **518** and **519.**

A laminate comprising:
a first layer of a first fluoropolymer;
a second layer of at least one ply of a fluoropolymer fabric overlying the first layer;
a third layer of a second fluoropolymer overlying the second layer opposite to the first layer;
wherein the laminate has a strain of not more than 50% at a stress of 15MPa as measured by DIN EN ISO 527 with a sample width of about 1 inch, at a clamp distance of about 50 mm, and a speed of about 50 mm/min.

The laminate, wherein the strain is not more than 50% at a stress of 20 MPa, wherein the strain is not more than 50% at a stress of 25 MPa, wherein the strain is not more than 50% at a stress of 30 MPa, wherein the strain is not more than 50% at a stress of 32 MPa, wherein the strain is not more than 50% at a stress of 34 MPa, or wherein the strain is not more than 50% at a stress of 36 MPa.

The laminate, wherein at a stress of 15 MPa, the strain is not more than 45%, such as not more than 40%, not more than 35%, not more than 30%, not more than 25%, not more than 24%, not more than 23%, not more than 22%, not more than 21%, or not more than 20%.

The laminate, wherein at a stress of 25MPa, the strain is not more than 45%, such as not more than 40%, not more than 39%, not more than 38%, not more than 37%, not more than 36%, or not more than 35%.

The laminate further comprising an adhesive between the first layer and the second layer.

The laminate further comprising an adhesive between the third layer and the second layer.

The laminate, wherein the adhesive is selected from the group consisting of tetrafluoroethylene-hexafluoropropylene (FEP), modified tetrafluoroethylene-hexafluoropropylene (mFEP), perfluoroalkoxyethylene (PFA), modified perfluoroalkoxyethylene (mPFA), polyimide (PI), polyamidimide (PAI), polyphenylene sulfide (PPS), polyphenylene sulfone (PPSO2), liquid crystal polymers (LCP), polyether ether ketones (PEEK), aromatic polyesters (Ekonol), ethylene-tetrafluoroethylene (ETFE), tetrafluoro-ethylene-perfluoro (methyl vinyl ether) (MFA), modified polytetrafluoroethylene (mPTFE), polyvinylidene fluoride (PVDF), ethylene-chlorotrifluoroethylene (ECTFE), polyethersulfone (PES), polyetherketone (PEK), and any combination thereof.

The laminate, wherein the adhesive comprises perfluoroalkoxyethylene (PFA).

The laminate, wherein the adhesive consist essentially of perfluoroalkoxyethylene (PFA).

The laminate, wherein the first fluoropolymer and the second fluoropolymer are the same or different and are selected from the group consisting of polytetrafluoroethylene (PTFE), modified polytetrafluoroethylene (mPTFE), ethylene-tetrafluoroethylene (ETFE), perfluoroalkoxyethylene (PFA), tetrafluoroethylene-hexafluoropropylene (FEP), tetrafluoro-ethylene-perfluoro (methyl vinyl ether) (MFA), polyvinylidene fluoride (PVDF), ethylene-chlorotrifluoroethylene (ECTFE), and any combination thereof.

The laminate, wherein the first fluoropolymer comprises polytetrafluoroethylene (PTFE) or modified polytetrafluoroethylene (mPTFE).

The laminate according to item 10, wherein the first fluoropolymer consists essentially of polytetrafluoroethylene (PTFE) or modified polytetrafluoroethylene (mPTFE).

The laminate according to item 10, wherein the second fluoropolymer comprises polytetrafluoroethylene (PTFE) or modified polytetrafluoroethylene (mPTFE).

The laminate, wherein the second fluoropolymer consists essentially of polytetrafluoroethylene (PTFE) or modified polytetrafluoroethylene (mPTFE).

The laminate wherein the first fluoropolymer or the second fluoropolymer further comprises at least one filler.

The laminate, wherein the at least one filler is selected from fibers, glass fibers, carbon fibers, aramids, inorganic materials, ceramic materials, carbon, glass, graphite, aluminum oxide, molybdenum sulfide, bronze, silicon carbide, woven fabric, powder, sphere, thermoplastic material, polyimide (PI), polyamidimide (PAI), polyphenylene sulfide (PPS), polyethersulofone (PES), polyphenylene sulfone (PPSO2), liquid crystal polymers (LCP), polyetherketone (PEK), polyether ether ketones (PEEK), aromatic polyesters (Ekonol), mineral materials, wollastonite, barium sulfate, or any combinations thereof.

The laminate wherein the at least one filler is present in an amount of at least about 1% by volume, such as at least about 2% by volume, at least about 3% by volume, at least about 5% by volume, at least about 7% by volume, at least about 10% by volume, at least about 12% by volume, at least about 15% by volume, at least about 17% by volume, or at least about 20% by volume.

The laminate, wherein the at least one filler is present in an amount of at not greater than about 40% by volume, such as not greater than about 35% by volume, not greater than about 30% by volume, not greater than about 27% by volume, not greater than about 25% by volume, not greater than about 22% by volume, not greater than about 20% by volume, not greater than about 17% by volume, or not greater than about 15% by volume.

The laminate, wherein the fluoropolymer fabric is selected from the group consisting of polytetrafluoroethylene (PTFE), modified polytetrafluoroethylene (mPTFE), ethylene-tetrafluoroethylene (ETFE), perfluoroalkoxyethylene (PFA), tetrafluoroethylene-hexafluoropropylene (FEP), tetrafluoro-ethylene-perfluoro (methyl vinyl ether) (MFA), polyvinylidene fluoride (PVDF), ethylene-chlorotrifluoroethylene (ECTFE), and any combination thereof.

The laminate, wherein the fluoropolymer fabric comprises polytetrafluoroethylene (PTFE) or modified polytetrafluoroethylene (mPTFE).

The laminate, wherein the fluoropolymer fabric consists essentially of polytetrafluoroethylene (PTFE).

The laminate wherein the first or the third layer have a thickness of at least about 0.05 mm, such as of at least about 0.1 mm, at least about 0.15 mm, at least about 0.2 mm, at least about 0.25 mm, at least about 0.3 mm, at least about 0.35 mm, at least about 0.4 mm, or at least about 0.45 mm.

The laminate wherein the first or the third layer have a thickness of not greater than about 2 mm, such as not greater than about 1.8 mm, not greater than about 1.6 mm, not greater than about 1.4 mm, not greater than about 1.2 mm, not greater than about 1 mm, not greater than about 0.95 mm, not greater than about 0.9 mm, not greater than about 0.85 mm, not greater than about 0.8 mm, not greater than about 0.75 mm, not greater than about 0.7 mm, not greater than about 0.65 mm, not greater than about 0.6 mm, not greater than about 0.55 mm, not greater than about 0.5 mm, not greater than about 0.4 mm, or not greater than about 0.3 mm.

The laminate wherein the at least one ply of fluoropolymer fabric has a thickness of at least about 0.04 mm, such as of at least about 0.08 mm, at least about 0.12 mm, at least about 0.16 mm, at least about 0.20 mm, at least about 0.24 mm, at least about 0.28 mm, at least about 0.32 mm, or at least about 0.36 mm.

The laminate wherein the at least one ply of fluoropolymer fabric has a thickness of not greater than about 1 mm, such as not greater than about 0.8 mm, not greater than about 0.6 mm, not greater than about 0.55 mm, not greater than about 0.5 mm, not greater than about 0.45 mm, not greater than about 0.4 mm, not greater than about 0.38 mm, not greater than about 0.34 mm, not greater than about 0.3 mm, not greater than about 0.26 mm, or not greater than about 0.22 mm.

The laminate, wherein the fluoropolymer fabric has a yarn thickness of at least about 0.02 mm, such as at least about 0.04 mm, at least about 0.06 mm, at least about 0.08 mm, at least about 0.1 mm, at least about 0.12 mm, at least about 0.14 mm, or at least about 0.16 mm.

The laminate wherein the fluoropolymer fabric has a yarn thickness of at not greater than about 0.3 mm, such as not greater than about 0.28 mm, not greater than about 0.26 mm, not greater than about 0.24 mm, not greater than about 0.22 mm, not greater than about 0.2 mm, or not greater than about 0.18 mm.

The laminate wherein the fluoropolymer fabric has a weight of at least about 100 g/m², such as at least about 120 g/m², at least about 140 g/m², at least about 160 g/m², at least about 180 g/m², at least about 200 g/m², at least about 220 g/m², at least about 240 g/m², at least about 260 g/m², at least about 280 g/m², or at least about 300 g/m².

The laminate wherein the fluoropolymer fabric has a weight of not greater than about 500 g/m², not greater than about 480 g/m², not greater than about 460 g/m², not greater than about 440 g/m², not greater than about 420 g/m², not greater than about 400 g/m², not greater than about 380 g/m², not greater than about 360 g/m², not greater than about 340 g/m², or not greater than about 320 g/m².

The laminate, wherein the fluoropolymer fabric has a warp thread count of at least about 100 threads/10 cm, such as at least about 125 threads/10 cm, at least about 150 threads/10 cm, at least about 175 threads/10 cm, at least about 200 threads/10 cm, at least about 225 threads/10 cm, at least about 250 threads/10 cm, at least about 275 threads/10 cm, at least about 300 threads/10 cm, at least about 325 threads/10 cm, or at least about 350 threads/10 cm.

The laminate, wherein the fluoropolymer fabric has a warp thread count of not greater than about 600 threads/10 cm, such as not greater than about 575 threads/10 cm, not greater than about 550 threads/10 cm, not greater than about 525 threads/10 cm, not greater than about 500 threads/10 cm, not greater than about 475 threads/10 cm, not greater than about 450 threads/10 cm, not greater than about 425 threads/10 cm, not greater than about 400 threads/10 cm, or not greater than about 375 threads/10 cm.

The laminate wherein the fluoropolymer fabric has a weft thread count of at least about 100 threads/10 cm, such as at least about 125 threads/10 cm, at least about 150 threads/10 cm, at least about 175 threads/10 cm, at least about 200 threads/10 cm, at least about 225 threads/10 cm, at least about 250 threads/10 cm, at least about 275 threads/10 cm, at least about 300 threads/10 cm, at least about 325 threads/10 cm, or at least about 350 threads/10 cm.

The laminate wherein the fluoropolymer fabric has a weft thread count of not greater than about 600 threads/10 cm, such as not greater than about 575 threads/10 cm, not greater than about 550 threads/10 cm, not greater than about 525 threads/10 cm, not greater than about 500 threads/10 cm, not greater than about 475 threads/10 cm, not greater than about 450 threads/10 cm, not greater than about 425 threads/10 cm, not greater than about 400 threads/10 cm, or not greater than about 375 threads/10 cm.

A composite diaphragm comprising:
a first layer of skived polytetrafluoroethylene (PTFE) or skived modified polytetrafluoroethylene (mPTFE);
a second layer of at least one ply of a fluoropolymer fabric overlying the first layer wherein the fluoropolymer fabric comprises polytetrafluoroethylene (PTFE) or modified polytetrafluoroethylene (mPTFE);
a third layer of skived polytetrafluoroethylene (PTFE) or skived modified polytetrafluoroethylene (mPTFE) overlying the second layer opposite to the first layer;
wherein the composite has a life time of at least about 2.5 megacycles in a high frequency flexlife test.

The composite diaphragm, wherein the life time is at least about 3.0 megacycles, such as at least about 3.5 megacycles, at least about 4.0 megacycles, at least about 4.5 megacycles, at least about 5.0 megacycles, at least about 5.5 megacycles, at least about 6.0 megacycles, at least about 6.5 megacycles, at least about 7.0 megacycles, at least about 7.2 megacycles, at least about 7.4 megacycles, at least about 7.6 megacycles, at least about 7.8 megacycles, at least about 8.0 megacycles, or at least about 8.2 megacycles; but not greater than about 15 megacycles.

The composite diaphragm further comprising an adhesive between the first layer and the second layer.

The composite diaphragm further comprising an adhesive between the third layer and the second layer.

The composite diaphragm wherein the adhesive is selected from the group consisting of tetrafluoroethylene-hexafluoropropylene (FEP), modified tetrafluoroethylene-hexafluoropropylene (mFEP), perfluoroalkoxyethylene (PFA), modified perfluoroalkoxyethylene (mPFA), polyimide (PI), polyamidimide (PAI), polyphenylene sulfide (PPS), polyphenylene sulfone (PPSO2), liquid crystal polymers (LCP), polyether ether ketones (PEEK), aromatic polyesters (Ekonol), ethylene-tetrafluoroethylene (ETFE), tetrafluoro-ethylene-perfluoro (methyl vinyl ether) (MFA), modified polytetrafluoroethylene (mPTFE), polyvinylidene fluoride (PVDF), ethylene-chlorotrifluoroethylene (ECTFE), polyethersulfone (PES), polyetherketone (PEK), and any combination thereof.

The composite diaphragm, wherein the adhesive comprises perfluoroalkoxyethylene (PFA).

The composite diaphragm, wherein the adhesive consist essentially of perfluoroalkoxyethylene (PFA).

The composite diaphragm according to any one of items 35 through 41, wherein the skived polytetrafluoroethylene (PTFE) or skived modified polytetrafluoroethylene (mPTFE) of the first layer or the second layer further comprises at least one filler.

The composite diaphragm, wherein the at least one filler is selected from fibers, glass fibers, carbon fibers, aramids, inorganic materials, ceramic materials, carbon, glass, graphite, aluminum oxide, molybdenum sulfide, bronze, silicon carbide, woven fabric, powder, sphere, thermoplastic material, polyimide (PI), polyamidimide (PAI), polyphenylene sulfide (PPS), polyethersulofone (PES), polyphenylene sulfone (PPSO2), liquid crystal polymers (LCP), polyetherketone (PEK), polyether ether ketones (PEEK), aromatic polyesters (Ekonol), mineral materials, wollastonite, barium sulfate, or any combinations thereof.

The composite diaphragm, wherein the at least one filler is present in an amount of at least about 1% by volume, such as at least about 2% by volume, at least about 3% by volume, at least about 5% by volume, at least about 7% by volume, at least about 10% by volume, at least about 12% by volume, at least about 15% by volume, at least about 17% by volume, or at least about 20% by volume.

A diaphragm membrane, the diaphragm membrane comprising:
a laminate, wherein the laminate includes
   a first layer of a first fluoropolymer,
   a second layer of at least one ply of a fluoropolymer fabric overlying the first layer, and
   a third layer of a second fluoropolymer overlying the second layer opposite to the first layer, wherein the laminate has a strain of not more than 50% at a stress of 15MPa as measured by DIN EN ISO 527 with a sample width of about 1 inch, at a clamp distance of about 50 mm, and a speed of about 50 mm/min; and
a backing, the backing having a connector for a piston or a spring.

A diaphragm pump comprising the diaphragm.

A solenoid valve comprising the diaphragm membrane.

A conveyor belt, the conveyor belt comprising a laminate, the laminate comprising a first end and a second end, wherein the laminate includes
a first layer of a first fluoropolymer,
a second layer of at least one ply of a fluoropolymer fabric overlying the first layer, and
a third layer of a second fluoropolymer overlying the second layer opposite to the first layer, wherein the laminate has a strain of not more than 50% at a stress of 15MPa as measured by DIN EN ISO 527 with a sample width of about 1 inch, at a clamp distance of about 50 mm, and a speed of about 50 mm/min; and
a seam connecting the first with the second end.
A bearing comprising
a laminate, wherein the laminate includes
a first layer of a first fluoropolymer,
a second layer of at least one ply of a fluoropolymer fabric overlying the first layer, and
a third layer of a second fluoropolymer overlying the second layer opposite to the first layer, wherein the laminate has a strain of not more than 50% at a stress of 15MPa as measured by DIN EN ISO 527 with a sample width of about 1 inch, at a clamp distance of about 50 mm, and a speed of about 50 mm/min; and
a substrate, the substrate overlying and in direct contact with the third layer.

A method of manufacturing a laminate, the method comprising:
providing a first layer of a first fluoropolymer;
overlying a second layer of at least one ply of a fluoropolymer fabric onto the first layer;
overlying a third layer of a second fluoropolymer onto the second layer opposite to the first layer to form a stack;
compressing the stack at a pressure of at least 1.5 MPa; and
heating the stack to a temperature of at least the glass transition temperature T_{g} of the fluoropolymer fabric for a first duration of at least 100 seconds.

A method of manufacturing a laminate, the method comprising:
providing a first layer of a first fluoropolymer;
applying a first adhesive onto the first layer
overlying a second layer of at least one ply of a fluoropolymer fabric onto the first adhesive;
applying a second adhesive;
overlying a third layer of a second fluoropolymer onto the second adhesive to form a stack;
compressing the stack at a pressure of at least about 1.5 MPa; and
heating the stack to a first temperature of at least the melting temperature Tₘ of the first adhesive or the second adhesive for a first duration of at least 100 seconds.

The method further comprising, after the heating, cooling the stack to a second temperature at a cooling rate of at least 0.0001 °C/s and not greater than 2 °C/s.

The method, wherein the pressure is at least about 1.6 MPa, such as at least about 1.7 MPa, at least about 1.8 MPa, at least about 1.9 MPa, at least about 2.0 MPa, at least about 2.05 MPa, at least about 2.10 MPa, or at least about 2.15 MPa.

The method, wherein the pressure is not greater than about 4.0 MPa, such as not greater than about 3.5 MPa, not greater than about 3.0 MPa, not greater than about 2.5 MPa, not greater than about 2.4 MPa, not greater than about 2.35 MPa, not greater than about 2.30 MPa, not greater than about 2.25 MPa, or not greater than about 2.20 MPa.

The method, wherein the first duration is at least 110 seconds, such as at least 120 seconds, at least 130 seconds, at least 140 seconds, or at least 145 seconds.

The method wherein the first duration is not greater than 250 seconds, such as not greater than 220 seconds, not greater than 200 seconds, not greater than 180 seconds, not greater than 170 seconds, not greater than 160 seconds, or not greater than 150 seconds.

The method, wherein the cooling rate is not greater than 1.8 °C/s, such as not greater than 1.6 °C/s, not greater than 1.4 °C/s, not greater than 1.2 °C/s, not greater than 1.0 °C/s, not greater than 0.8 °C/s, not greater than 0.6 °C/s, not greater than 0.5 °C/s, not greater than 0.4 °C/s, not greater than 0.3 °C/s, not greater than 0.2 °C/s, or not greater than 0.1 °C/s.

The method, wherein the first adhesive or the second adhesive are the same or different and are selected from the group consisting of tetrafluoroethylene-hexafluoropropylene (FEP), modified tetrafluoroethylene-hexafluoropropylene (mFEP), perfluoroalkoxyethylene (PFA), modified perfluoroalkoxyethylene (mPFA), polyimide (PI), polyamidimide (PAI), polyphenylene sulfide (PPS), polyphenylene sulfone (PPSO2), liquid crystal polymers (LCP), polyether ether ketones (PEEK), aromatic polyesters (Ekonol), ethylene-tetrafluoroethylene (ETFE), tetrafluoro-ethylene-perfluoro (methyl vinyl ether) (MFA), modified polytetrafluoroethylene (mPTFE), polyvinylidene fluoride (PVDF), ethylene-chlorotrifluoroethylene (ECTFE), polyethersulfone (PES), polyetherketone (PEK), and any combination thereof.

The method wherein the first adhesive and the second adhesive comprises perfluoroalkoxyethylene (PFA).

The method, wherein the first adhesive and the second adhesive consist essentially of perfluoroalkoxyethylene (PFA).

The method, wherein the first fluoropolymer and the second fluoropolymer are the same or different and are selected from the group consisting of polytetrafluoroethylene (PTFE), modified polytetrafluoroethylene (mPTFE), ethylene-tetrafluoroethylene (ETFE), perfluoroalkoxyethylene (PFA), tetrafluoroethylene-hexafluoropropylene (FEP), tetrafluoro-ethylene-perfluoro (methyl vinyl ether) (MFA), polyvinylidene fluoride (PVDF), ethylene-chlorotrifluoroethylene (ECTFE), and any combination thereof.

The method wherein the first fluoropolymer comprises polytetrafluoroethylene (PTFE) or modified polytetrafluoroethylene (mPTFE).

The method, wherein the first fluoropolymer consists essentially of polytetrafluoroethylene (PTFE) or modified polytetrafluoroethylene (mPTFE).

The method, wherein the second fluoropolymer comprises polytetrafluoroethylene (PTFE) or modified polytetrafluoroethylene (mPTFE).

The method wherein the second fluoropolymer consists essentially of polytetrafluoroethylene (PTFE) or modified polytetrafluoroethylene (mPTFE).

The method, wherein the first fluoropolymer or the second fluoropolymer further comprises at least one filler.

The method, wherein the at least one filler is selected from fibers, glass fibers, carbon fibers, aramids, inorganic materials, ceramic materials, carbon, glass, graphite, aluminum oxide, molybdenum sulfide, bronze, silicon carbide, woven fabric, powder, sphere, thermoplastic material, polyimide (PI), polyamidimide (PAI), polyphenylene sulfide (PPS), polyethersulofone (PES), polyphenylene sulfone (PPSO2), liquid crystal polymers (LCP), polyetherketone (PEK), polyether ether ketones (PEEK), aromatic polyesters (Ekonol), mineral materials, wollastonite, barium sulfate, or any combinations thereof.

The method, wherein the at least one filler is present in an amount of at least about 1% by volume, such as at least about 2% by volume, at least about 3% by volume, at least about 5% by volume, at least about 7% by volume, at least about 10% by volume, at least about 12% by volume, at least about 15% by volume, at least about 17% by volume, or at least about 20% by volume.

The method, wherein the at least one filler is present in an amount of at not greater than about 40% by volume, such as not greater than about 35% by volume, not greater than about 30% by volume, not greater than about 27% by volume, not greater than about 25% by volume, not greater than about 22% by volume, not greater than about 20% by volume, not greater than about 17% by volume, or not greater than about 15% by volume,.

The method, wherein the fluoropolymer fabric is selected from the group consisting of polytetrafluoroethylene (PTFE), modified polytetrafluoroethylene (mPTFE), ethylene-tetrafluoroethylene (ETFE), perfluoroalkoxyethylene (PFA), tetrafluoroethylene-hexafluoropropylene (FEP), tetrafluoro-ethylene-perfluoro (methyl vinyl ether) (MFA), polyvinylidene fluoride (PVDF), ethylene-chlorotrifluoroethylene (ECTFE), and any combination thereof.

The method wherein the fluoropolymer fabric comprises polytetrafluoroethylene (PTFE) or modified polytetrafluoroethylene (mPTFE).

The method, wherein the fluoropolymer fabric consists essentially of polytetrafluoroethylene (PTFE).

The method, wherein the first or the third layer have a thickness of at least about 0.05 mm, such as of at least about 0.1 mm, at least about 0.15 mm, at least about 0.2 mm, at least about 0.25 mm, at least about 0.3 mm, at least about 0.35 mm, at least about 0.4 mm, or at least about 0.45 mm.

The method, wherein the first or the third layer have a thickness of not greater than about 2 mm, such as not greater than about 1.8 mm, not greater than about 1.6 mm, not greater than about 1.4 mm, not greater than about 1.2 mm, not greater than about 1 mm, not greater than about 0.95 mm, not greater than about 0.9 mm, not greater than about 0.85 mm, not greater than about 0.8 mm, not greater than about 0.75 mm, not greater than about 0.7 mm, not greater than about 0.65 mm, not greater than about 0.6 mm, not greater than about 0.55 mm, not greater than about 0.5 mm, not greater than about 0.4 mm, or not greater than about 0.3 mm.

The method, wherein the at least one ply of fluoropolymer fabric has a thickness of at least about 0.04 mm, such as of at least about 0.08 mm, at least about 0.12 mm, at least about 0.16 mm, at least about 0.20 mm, at least about 0.24 mm, at least about 0.28 mm, at least about 0.32 mm, or at least about 0.36 mm.

The method, wherein the at least one ply of fluoropolymer fabric has a thickness of not greater than about 1 mm, such as not greater than about 0.8 mm, not greater than about 0.6 mm, not greater than about 0.55 mm, not greater than about 0.5 mm, not greater than about 0.45 mm, not greater than about 0.4 mm, not greater than about 0.38 mm, not greater than about 0.34 mm, not greater than about 0.3 mm, not greater than about 0.26 mm, or not greater than about 0.22 mm.

The method, further comprising chemically etching the fluoropolymer fabric prior the overlying of the second layer.

The method, wherein the chemically etching includes soaking the fluoropolymer fabric in ammonia.

### EXAMPLES

### General

In the following examples, a fluoropolymer layer was overlaid with a fluoropolymer fabric. A second fluoropolymer layer was overlaid onto the polymer fabric to form a fluoropolymer/fluoropolymer fabric/fluoropolymer assembly. Fluoropolymer layers were selected from skived PTFE, skived mPTFE. The fluoropolymer fabric was selected from two types of PTFE fabric, namely Gore-Rastex® CCC 216 (37/37 threads/cm; twill 3/1) or Teflon-Gewebe TC 117 (24/22 threads/cm). Optionaly, an adhesive was placed between one fluoropolymer layer and the fluoropolymer fabric. In the examples, PFA was selected as an adhesive. The assemblies were laminated at pressures between 0.3 MPa to 0.5 MPa and a temperature between 400 °C and 410 °C, in most experiments 405 °C, for 100 to 200 seconds, in most experiments 150 seconds. Afterwards, the laminates were quickly cooled with water to 40 °C. Cooling time took up to 500 seconds. In all experiments, the fluoropolymer fabric is an internal layer of the laminate. The laminate cross-section can be symmetric with the fluoropolymer fabric being the central layer. Alternatively, the laminate can be asymmetric, where the numbers of layers overlying one major surface of the fabric is different from the numbers of layers overlying a second major surface.

### Example 1

An mPTFE skived layer having a thickness of 0.42 mm was overlaid with a PTFE polymer fabric (Gore-Rastex® CCC 216; 37/37 threads/cm; twill 3/1) having a thickness of 0.25 mm. A second mPTFE skived layer with a thickness of 0.42 mm was overlaid onto the polymer fabric to form an mPTFE/PTFE fabric/mPTFE assembly. The assembly was laminated according to procedure described above.

### Example 2

A PTFE skived layer having a thickness of 0.5 mm was overlaid with a PTFE polymer fabric (Gore-Rastex® CCC 216; 37/37 threads/cm; twill 3/1) having a thickness of 0.25 mm. A second PTFE skived layer with a thickness of 0.5 mm was overlaid onto the polymer fabric to form a PTFE/PTFE fabric/PTFE assembly. The assembly was laminated according to procedure described above.

### Example 3

An mPTFE skived layer having a thickness of 0.42 mm was overlaid with about 0.025 mm of PFA film. The PFA film was overlaid with a PTFE polymer fabric (Gore-Rastex® CCC 216; 37/37 threads/cm; twill 3/1) having a thickness of 0.25 mm. The PTFE fabric was overlaid with another 0.025 mm of PFA film. A second mPTFE skived layer with a thickness of 0.42 mm was overlaid onto the PFA film to form a mPTFE/PFA/PTFE fabric/PFA/mPTFE assembly. The assembly was laminated according to procedure described above.

### Example 4A

A PTFE skived layer having a thickness of 0.5 mm was overlaid with about 0.025 mm of PFA film. The PFA film was overlaid with a PTFE polymer fabric (Gore-Rastex® CCC 216; 37/37 threads/cm; twill 3/1) having a thickness of 0.25 mm. The PTFE fabric was overlaid with another 0.025 mm of PFA film. A second PTFE skived layer with a thickness of 0.5 mm was overlaid onto the PFA film to form a PTFE/PFA/PTFE fabric/PFA/PTFE assembly. The assembly was laminated according to procedure described above.

### Example 4B

A PTFE skived layer having a thickness of 0.4 mm was overlaid with about 0.050 mm of PFA film. The PFA film was overlaid with a PTFE polymer fabric (Gore-Rastex® CCC 216; 37/37 threads/cm; twill 3/1) having a thickness of 0.25 mm. The PTFE fabric was overlaid with another 0.050 mm of PFA film. A second PTFE skived layer with a thickness of 0.4 mm was overlaid onto the PFA film to form a PTFE/PFA/PTFE fabric/PFA/PTFE assembly. The assembly was laminated according to procedure described above.

### Example 5

An mPTFE skived layer having a thickness of 0.42 mm was overlaid with about 0.025 mm of PFA film. The PFA film was overlaid with a PTFE polymer fabric (Gore-Rastex® CCC 216; 37/37 threads/cm; twill 3/1) having a thickness of 0.25 mm. A second mPTFE skived layer with a thickness of 0.42 mm was placed onto the fabric to form a mPTFE/PFA/PTFE fabric/mPTFE assembly. The assembly was laminated according to procedure described above.

### Example 6

A PTFE skived layer having a thickness of 0.5 mm was overlaid with about 0.025 mm of PFA film. The PFA film was overlaid with a PTFE polymer fabric (Gore-Rastex® CCC 216; 37/37 threads/cm; twill 3/1) having a thickness of 0.25 mm. A second PTFE skived layer with a thickness of 0.5 mm was placed onto the fabric to form a PTFE/PFA/PTFE fabric/PTFE assembly. The assembly was laminated according to procedure described above.

### Example 7

An mPTFE skived layer having a thickness of 0.42 mm was overlaid with a PTFE skived layer having a thickness of 0.1 mm. A PTFE polymer fabric (Gore-Rastex® CCC 216; 37/37 threads/cm; twill 3/1) having a thickness of 0.25 mm was laid over the PTFE skived layer. A second PTFE skived layer having a thickness of 0.1 mm was laid onto the polymer fabric and a second mPTFE skived layer with a thickness of 0.42 mm was laid over the second PTFE skived layer to form a mPTFE/PTFE/PTFE fabric/PTFE/mPTFE assembly. The assembly was laminated according to procedure described above.

### Example 8

An mPTFE skived layer having a thickness of 0.42 mm was overlaid with a PTFE skived layer having a thickness of 0.1 mm. The PTFE skived layer was overlaid with about 0.025 mm of PFA film. A PTFE polymer fabric (Gore-Rastex® CCC 216; 37/37 threads/cm; twill 3/1) having a thickness of 0.25 mm was laid over the PFA film. A second PFA film having a thickness of about 0.025 mm was layered over the polymer fabric. A second PTFE skived layer having a thickness of 0.1 mm was laid onto the PFA film and a second mPTFE skived layer with a thickness of 0.42 mm was laid over the second PTFE skived layer to form a mPTFE/PTFE/PFA/PTFE fabric/PFA/PTFE/mPTFE assembly. The assembly was laminated according to procedure described above.

### Example 9

An mPTFE skived layer having a thickness of 0.42 mm was overlaid with a PTFE polymer fabric (Teflon-Gewebe TC 117; 24/22 threads/cm) having a thickness of 0.27 mm. A second mPTFE skived layer with a thickness of 0.42 mm was overlaid onto the polymer fabric to form an mPTFE/PTFE fabric/mPTFE assembly. The assembly was laminated according to procedure described above.

### Example 10

A PTFE skived layer having a thickness of 0.5 mm was overlaid with about 0.025 mm of PFA film. The PFA film was overlaid with an PTFE polymer fabric (Teflon-Gewebe TC 117; 24/22 threads/cm) having a thickness of 0.25 mm. The PTFE fabric was overlaid with another 0.025 mm of PFA film. A second PTFE skived layer with a thickness of 0.5 mm was overlaid onto the PFA film to form a PTFE/PFA/PTFE fabric/PFA/PTFE assembly. The assembly was laminated according to procedure described above.

### Example 11

### High Frequency Flexlife Test

A sample was prepared according to Example 3. From the sample, a disc having a diameter of 125 mm was cut out and a concentric hole having a diameter of 18 mm was cut into the disc to form Sample 1. The flexlife test sample 1 was placed in the test set up as described in FIG. 4D. The test sample was cycled through to 15 mm amplitudes and the cycles were counted. A Comparison Sample 1 made of quenched mPTFE was prepared and subjected to the same test. Table 1 shows the results of the test.

**Table 1**

| Laminate | Life Time/cycles |
|---|---|
| Comparison Sample 1 | 1,576,800 |
| Sample 1 | 8,339,520 |

### Example 12

### Tensile Strength Testing

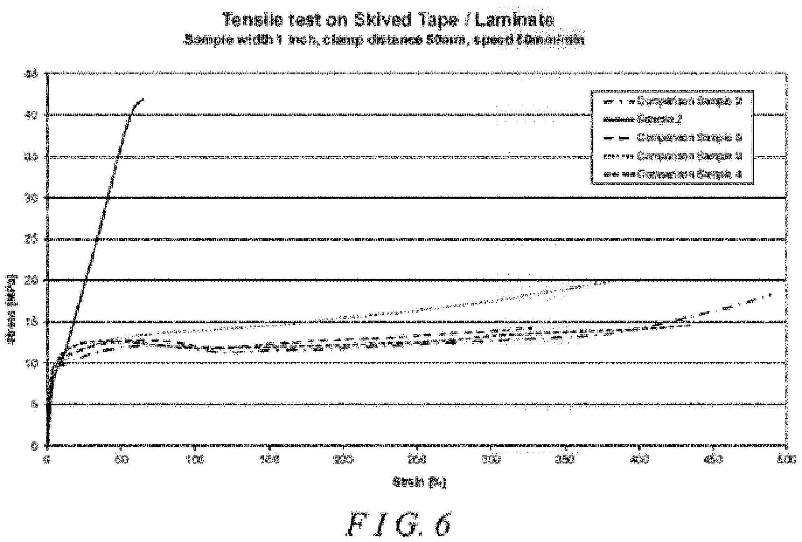

Stress-strain testing was conducted of samples having a sample width of 1 inch with a clamp distance 50 mm and a speed 50 mm/min. Sample 2 was prepared according to Example 3. Comparison Sample 2 comprised of quenched mPTFE, Comparison Samples 3 and 4 comprised of PTFE and mPTFE, respectively; and Comparison Sample 5 comprises of a laminate including mPTFE/PFA/mPTFE. FIG. 6 depicts the stress-strain curves of the samples.

### Example 13

### Deformation under Load

A sample of the laminate having a thickness of about 1 mm was loaded under a compression die (area 3 cm²) for 24 hours at a load of 25 MPa. The thickness was measured 15 minutes after release of the load. The difference of original thickness and thickness after load is the Deformation under Load following ASTM D621. Results for some Examples are summarized in Table 2.

### Example 14

### Permeation Water Vapor [g∗mm/m²∗d]

Water Vapor Transmission Rate measurements of sample sheets having a thickness of about 1 mm were measured at 38 °C using a MOCON Aquatran Water Vapor Analyzer with test conditions at a humidity of 100% and a carrier gas flow rate of 20 sccm. The test area is 50 cm² and the exam cycle takes 480 minutes. Results for some Examples are summarized in Table 2.

### Example 15

### Permeation Oxygen [cc(O₂)∗mm/m²∗d∗atm]

Oxygen Transmission Rate measurements of sample sheets having a thickness of about 1 mm were measured at 25 °C using a MOCON OxTran 2/21 oxygen permeation analyzer with test conditions at a humidity of 0% and 100% oxygen carrier gas at a flow rate of 20 sccm. The test area is 50 cm² and the exam cycle takes 60 minutes. Results for some Examples are summarized in Table 2.

**Table 2**

| **Material** | Deformation under Load | Water Vapor permeability | Oxygen Permeability | Density |
|---|---|---|---|---|
| | [µm] | [g∗mm/m²∗d] | [cc(O2)∗mm/m²∗d∗atm] | [g/cm³] |
| PTFE | 428 | 0.041 | 6340 | 2.16 |
| mPTFE | 173 | 0.038 | 6096 | 2.16 |
| quenched mPTFE | 91 | 0.089 | 14348 | 2.13 |
| Example 3 | 97 | 0.078 | 7449 | 2.14 |
| Example 4B | 130 | n/a | n/a | 2.14 |

As can be seen from Table 2, the Deformation under Load of the Examples improves over the Deformation under Load of PTFE and mPTFE while maintaining water vapor and oxygen permeabilities in a range that suffices certain standards for an application, such as diaphragms for diaphragm pumps. In one embodiment, a Deformation under Load is not greater than 150 µm and the water vapor permeability is not greater than 0.085 g∗mm/m²∗d. In one embodiment, a Deformation under Load is not greater than 150 µm and the oxygen vapor permeability is not greater than cc(O₂)∗mm/m²∗d∗atm.

Note that not all of the activities described above in the general description or the examples are required, that a portion of a specific activity may not be required, and that one or more further activities may be performed in addition to those described. Still further, the order in which activities are listed are not necessarily the order in which they are performed.

In the foregoing specification, the concepts have been described with reference to specific embodiments. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of invention.

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" are employed to describe elements and components described herein. This is done merely for convenience and to give a general sense of the scope of the invention. This description should be read to include one or at least one and the singular also includes the plural unless it is obvious that it is meant otherwise.

## Claims

1. A laminate comprising:
a first layer of skived polytetrafluoroethylene (PTFE) or skived modified polytetrafluoroethylene (mPTFE);
a second layer of at least one ply of a fluoropolymer fabric overlying the first layer wherein the fluoropolymer fabric comprises polytetrafluoroethylene (PTFE) or modified polytetrafluoroethylene (mPTFE);
a third layer of skived polytetrafluoroethylene (PTFE) or skived modified polytetrafluoroethylene (mPTFE) overlying the second layer opposite to the first layer;
wherein the laminate has a strain of not more than 50% at a stress of 15MPa as measured by DIN EN ISO 527 with a sample width of 2.54 cm (1 inch), at a clamp distance of 50 mm, and a speed of 50 mm/min.

2. The laminate of claim 1,
wherein the laminate is comprised in a diaphragm membrane, wherein the diaphragm membrane further comprises a backing having a connector for a piston or a spring.

3. The laminate of claim 2, wherein the laminate has a life time of at least 2.5 megacycles in a high frequency flexlife test, wherein the high frequency flexlife test is performed by cutting out a disc from the composite having a diameter of 125 mm and cutting a concentric hole having a diameter of 18 mm into the disc to form a sample, and placing the sample in a test set up as described in FIG. 4D, wherein the test sample is cycled through to 15 mm amplitudes and the cycles are counted.

4. The laminate of claim 1,
wherein the laminate is comprised in a conveyor belt, wherein the conveyor belt further comprises a seam connecting the first with the second end.

5. The laminate of claim 4, wherein the laminate has a strain of not more than 20% at a stress of 15MPa as measured by DIN EN ISO 527 with a sample width of 2.54 cm (1 inch), at a clamp distance of 50 mm, and a speed of 50 mm/min.

6. The laminate of claim 1,
wherein the laminate is comprised in a bearing, wherein the bearing further comprises a substrate, the substrate overlying and in direct contact with the third layer.

7. The laminate of claim 6,
wherein the laminate has a strain of not more than 20% at a stress of 15MPa as measured by DIN EN ISO 527 with a sample width of 2.54 cm (1 inch), at a clamp distance of 50 mm, and a speed of 50 mm/min; and

8. A method of manufacturing a laminate according to claim 1, the method comprising:
providing a first layer of a first fluoropolymer;
overlying a second layer of at least one ply of a fluoropolymer fabric onto the first layer;
overlying a third layer of a second fluoropolymer onto the second layer opposite to the first layer to form a stack;
compressing the stack at a pressure of at least 1.5 MPa; and
heating the stack to a temperature of at least the glass transition temperature T_{g} of the fluoropolymer fabric for a first duration of at least 100 seconds.

9. The method of claim 8, the method further comprising:
applying a first adhesive onto the first layer;
overlying the second layer of at least one ply of a fluoropolymer fabric onto the first adhesive;
applying a second adhesive;
overlying the third layer of a second fluoropolymer onto the second adhesive to form a stack; and
compressing the stack at a pressure of at least 1.5 MPa before
heating the stack to a first temperature of at least the melting temperature Tₘ of the first adhesive or the second adhesive for a first duration of at least 100 seconds.

10. The method according to claims 8 or 9, further comprising, after the heating, cooling the stack to a second temperature at a cooling rate of at least 0.0001 °C/s and not greater than 2 °C/s.

11. The method according to any one of the claims 8 through 10, wherein the pressure is at least 1.6 MPa, such as at least 1.7 MPa, at least 1.8 MPa, at least 1.9 MPa, at least 2.0 MPa, at least 2.05 MPa, at least 2.10 MPa, or at least 2.15 MPa.

12. The method according to any one of the claims 8 through 11, wherein the pressure is not greater than 4.0 MPa, such as not greater than 3.5 MPa, not greater than 3.0 MPa, not greater than 2.5 MPa, not greater than 2.4 MPa, not greater than 2.35 MPa, not greater than 2.30 MPa, not greater than 2.25 MPa, or not greater than 2.20 MPa.

## Patentansprüche

1. Laminat, umfassend:
eine erste Schicht aus geschältem Polytetrafluorethylen (PTFE) oder geschältem modifiziertem Polytetrafluorethylen (mPTFE);
eine zweite Schicht aus mindestens einer Lage eines Fluorpolymergewebes, die über der ersten Schicht liegt, wobei das Fluorpolymergewebe Polytetrafluorethylen (PTFE) oder modifiziertes Polytetrafluorethylen (mPTFE) umfasst;
eine dritte Schicht aus geschältem Polytetrafluorethylen (PTFE) oder geschältem modifiziertem Polytetrafluorethylen (mPTFE), die über der zweiten Schicht gegenüber der ersten Schicht liegt;
wobei das Laminat gemessen nach DIN EN ISO 527 bei einer Probenbreite von 2,54 cm (1 Zoll) bei einem Spannvorrichtungsabstand von 50 mm und einer Geschwindigkeit von 50 mm/min sowie einer Belastung von 15 MPa eine Dehnung von nicht mehr als 50 % aufweist.

2. Laminat nach Anspruch 1,
wobei das Laminat in einer Diaphragmamembran enthalten ist, wobei die Diaphragmamembran ferner einen Träger umfasst, der einen Verbinder für einen Kolben oder eine Feder aufweist.

3. Laminat nach Anspruch 2, wobei das Laminat in einem Hochfrequenz-Biegelebensdauertest eine Lebensdauer von mindestens 2,5 Megazyklen aufweist, wobei der Hochfrequenz-Biegelebensdauertest durchgeführt wird, indem eine Scheibe aus dem Verbundstoff herausgeschnitten wird, die einen Durchmesser von 125 mm aufweist, und in die Scheibe ein konzentrisches Loch geschnitten wird, das einen Durchmesser von 18 mm aufweist, um eine Probe zu bilden, und die Probe in einem in FIG. 4D beschriebenen Prüfaufbau angebracht wird, wobei die Probe mit Amplituden von 15 mm zyklisch belastet wird und die Zyklen gezählt werden.

4. Laminat nach Anspruch 1,
wobei das Laminat in einem Förderbandgurt enthalten ist, wobei der Förderbandgurt ferner eine Naht aufweist, die das erste mit dem zweiten Ende verbindet.

5. Laminat nach Anspruch 4, wobei das Laminat gemessen nach DIN EN ISO 527 bei einer Probenbreite von 2,54 cm (1 Zoll) bei einem Spannvorrichtungsabstand von 50 mm und einer Geschwindigkeit von 50 mm/min sowie einer Belastung von 15 MPa eine Dehnung von nicht mehr als 20 % aufweist.

6. Laminat nach Anspruch 1,
wobei das Laminat in einem Lager enthalten ist, wobei das Lager ferner ein Substrat umfasst, wobei das Substrat über der dritten Schicht liegt und in direktem Kontakt mit dieser steht.

7. Laminat nach Anspruch 6,
wobei das Laminat gemessen nach DIN EN ISO 527 bei einer Probenbreite von 2,54 cm (1 Zoll) bei einem Zangenabstand von 50 mm und einer Geschwindigkeit von 50 mm/ Min; eine Dehnung von nicht mehr als 20 % bei einer Belastung von 15 MPa aufweist; und

8. Verfahren zum Herstellen eines Laminats nach Anspruch 1, wobei das Verfahren umfasst:
Bereitstellen einer ersten Schicht eines ersten Fluorpolymers;
Aufbringen einer zweiten Schicht aus mindestens einer Lage eines Fluorpolymergewebes auf die erste Schicht;
Aufbringen einer dritten Schicht eines zweiten Fluorpolymers auf die der ersten Schicht gegenüberliegende zweite Schicht, um einen Stapel zu bilden;
Komprimieren des Stapels bei einem Druck von mindestens 1,5 MPa; und
Erwärmen des Stapels auf eine Temperatur von mindestens der Glasübergangstemperatur T_{g} des Fluorpolymergewebes während einer ersten Dauer von mindestens 100 Sekunden.

9. Verfahren nach Anspruch 8, ferner umfassend:
Auftragen eines ersten Haftmittels auf die erste Schicht;
Aufbringen der zweiten Schicht aus mindestens einer Lage eines Fluorpolymergewebes auf das erste Haftmittel;
Auftragen eines zweiten Haftmittels;
Aufbringen der dritten Schicht eines zweiten Fluorpolymers auf das zweite Haftmittel, um einen Stapel zu bilden; und
Komprimieren des Stapels bei einem Druck von mindestens 1,5 MPa vor dem
Erwärmen des Stapels auf eine erste Temperatur von mindestens der Schmelztemperatur Tₘ des ersten Haftmittels oder des zweiten Haftmittels während einer Dauer von mindestens 100 Sekunden.

10. Verfahren nach Anspruch 8 oder 9, ferner umfassend nach dem Erwärmen ein Abkühlen des Stapels auf eine zweite Temperatur bei einer Abkühlgeschwindigkeit von mindestens 0,0001 °C/s und nicht mehr als 2 °C/s.

11. Verfahren nach einem der Ansprüche 8 bis 10, wobei der Druck mindestens 1,6 MPa beträgt, beispielsweise mindestens 1,7 MPa, mindestens 1,8 MPa, mindestens 1,9 MPa, mindestens 2,0 MPa, mindestens 2,05 MPa, mindestens 2,10 MPa oder mindestens 2,15 MPa.

12. Verfahren nach einem der Ansprüche 8 bis 11, wobei der Druck nicht größer als 4,0 MPa ist, beispielsweise nicht größer als 3,5 MPa, nicht größer als 3,0 MPa, nicht größer als 2,5 MPa, nicht größer als 2,4 MPa, nicht größer als 2,35 MPa, nicht größer als 2,30 MPa, nicht größer als 2,25 MPa oder nicht größer als 2,20 MPa.

## Revendications

1. Stratifié comprenant :
une première couche de polytétrafluoroéthylène (PTFE) biseauté ou de polytétrafluoroéthylène modifié (mPTFE) biseauté ;
une deuxième couche d'au moins une couche d'un tissu de polymère fluoré recouvrant la première couche, le tissu de polymère fluoré comprenant du polytétrafluoroéthylène (PTFE) ou du polytétrafluoroéthylène modifié (mPTFE) ;
une troisième couche de polytétrafluoroéthylène (PTFE) biseauté ou de polytétrafluoroéthylène modifié (mPTFE) biseauté recouvrant la deuxième couche opposée à la première couche ;
dans lequel le stratifié a une déformation de pas plus de 50 % à une contrainte de 15 MPa telle que mesurée selon la norme DIN EN ISO 527 avec une largeur d'échantillon de 2,54 cm (1 pouce), à une distance de serrage de 50 mm et à une vitesse de 50 mm/min.

2. Stratifié selon la revendication 1,
dans lequel le stratifié est compris dans une membrane de diaphragme, dans lequel la membrane de diaphragme comprend en outre un support ayant un connecteur pour un piston ou un ressort.

3. Stratifié selon la revendication 2, dans lequel le stratifié a une durée de vie d'au moins 2,5 mégacycles dans un test de résistance à la flexion haute fréquence, dans lequel le test de résistance à la flexion haute fréquence est réalisé en découpant un disque dans le composite ayant un diamètre de 125 mm et en découpant un trou concentrique ayant un diamètre de 18 mm dans le disque pour former un échantillon et en plaçant l'échantillon dans un montage de test tel que décrit à la figure 4D, dans lequel l'échantillon à tester est soumis à des cycles à des amplitudes de 15 mm et les cycles sont comptés.

4. Stratifié selon la revendication 1,
dans lequel le stratifié est compris dans une bande transporteuse, dans lequel la bande transporteuse comprend en outre une couture reliant la première extrémité à la seconde extrémité.

5. Stratifié selon la revendication 4, dans lequel le stratifié a une déformation d'au plus 20 % à une contrainte de 15 MPa telle que mesurée selon la norme DIN EN ISO 527 avec une largeur d'échantillon de 2,54 cm (1 pouce), à une distance de serrage de 50 mm, et une vitesse de 50 mm/min.

6. Stratifié selon la revendication 1,
dans lequel le stratifié est compris dans un roulement, dans lequel le roulement comprend en outre un substrat, le substrat recouvrant et étant en contact direct avec la troisième couche.

7. Stratifié selon la revendication 6,
dans lequel le stratifié a une déformation maximale de 20 % sous une contrainte de 15 MPa, mesurée selon la norme DIN EN ISO 527, avec une largeur d'échantillon de 2,54 cm (1 pouce), à une distance de serrage de 50 mm et une vitesse de 50 mm/min ; et

8. Procédé de fabrication d'un stratifié selon la revendication 1, le procédé comprenant :
la fourniture d'une première couche d'un premier polymère fluoré ;
la superposition d'une deuxième couche d'au moins une couche d'un tissu de polymère fluoré sur la première couche ;
la superposition d'une troisième couche d'un second polymère fluoré sur la deuxième couche opposée à la première couche pour former un empilement ;
la compression de l'empilement à une pression d'au moins 1,5 MPa ; et
le chauffage de l'empilement à une température d'au moins la température de transition vitreuse T_{g} du tissu de polymère fluoré pendant une première durée d'au moins 100 secondes.

9. Procédé selon la revendication 8, comprenant en outre :
l'application d'un premier adhésif sur la première couche ;
la superposition de la deuxième couche d'au moins une couche d'un tissu de polymère fluoré sur le premier adhésif ;
l'application d'un second adhésif ;
la superposition de la troisième couche d'un second polymère fluoré sur le second adhésif pour former un empilement ; et
la compression de l'empilement à une pression d'au moins 1,5 MPa avant de
chauffer l'empilement à une première température d'au moins la température de fusion Tₘ du premier adhésif ou du second adhésif pendant une première durée d'au moins 100 secondes.

10. Procédé selon la revendication 8 ou 9, comprenant en outre, après le chauffage, le refroidissement de l'empilement à une seconde température à une vitesse de refroidissement d'au moins 0,0001 °C/s et non supérieure à 2 °C/s.

11. Procédé selon l'une quelconque des revendications 8 à 10, dans lequel la pression est d'au moins 1,6 MPa, telle que d'au moins 1,7 MPa, d'au moins 1,8 MPa, d'au moins 1,9 MPa, d'au moins 2,0 MPa, d'au moins 2,05 MPa, d'au moins 2,10 MPa ou d'au moins 2,15 MPa.

12. Procédé selon l'une quelconque des revendications 8 à 11, dans lequel la pression est non supérieure à 4,0 MPa, telle que non supérieure à 3,5 MPa, non supérieure à 3,0 MPa, non supérieure à 2,5 MPa, non supérieure à 2,4 MPa, non supérieure à 2,35 MPa, pas supérieure à 2,30 MPa, non supérieure à 2,25 MPa, ou non supérieure à 2,20 MPa.
